# EUROPÄISCHE PATENTSCHRIFT

(11) **EP 0 390 810 B1**
(45) Veröffentlichungstag und Bekanntmachung des Hinweises auf die Patenterteilung: **12.05.1993**
(21) Anmeldenummer: 88909994.1
(22) Anmeldetag: 01.12.1988
(51) Int. Cl.: H01B 5/10

(54) **ERDSEILLUFTKABEL**
OVERHEAD CABLE WITH GUARD-WIRE
CABLE AERIEN A FIL DE GARDE

(30) Priorität: 15.12.1987 DE 3742925
(43) Veröffentlichungstag der Anmeldung: 10.10.1990
(73) Patentinhaber: SIEMENS AKTIENGESELLSCHAFT, 80333 München (DE)
(72) Erfinder: OESTREICH, Ulrich, D-8000 München 70 (DE)
(86) Internationale Anmeldenummer: DE8800747
(87) Internationale Veröffentlichungsnummer: WO8906039

(56) Entgegenhaltungen:
- DE-A- 3 446 766
- GB-A- 1 598 540
- PATENT ABSTRACTS OF JAPAN, Vol. 2, No. 61 (e-78)(1703), 9 May 1978, & JP-A-53 24582

## Beschreibung

Die Erfindung bezieht sich auf ein Erdseilluftkabel gemäß dem Oberbegriff des Anspruchs 1 mit integrierten optischen Übertragungselementen, das aus mehreren Verseilelementen besteht, von denen mindestens eines mindestens ein optisches Übertragungselement enthält.

In einem elektrischen Energieversorgungsnetz müssen die Knotenpunkte des Netzes durch Nachrichtenkabel miteinander verbunden sein, die den Austausch von für den Betrieb des Netzes notwendigen Informationen ermöglichen. Die Nachrichtenkabel werden zweckmäßigerweise parallel zu den Energieversorgungsleitungen geführt oder sogar in diese integriert. Im Falle der Integration eines Nachrichtenkabels in ein Erdseilluftkabel ist die Verwendung eines optischen Übertragungselementes als Nachrichtenkabel wegen der großen Störsicherheit gegen elektromagnetische Impulse vorteilhaft (DE-AS 26 04 766).

In der GB-PS 15 98 540 ist ein Kabel beschrieben, bei dem eines der leitenden Aluminium-Verseilelemente durch ein optisches Übertragungselement ersetzt ist.

Optische Übertragungselemente in Form von Lichtwellenleitern oder Lichtwellenleiterbündeln sind mechanisch weitaus weniger beanspruchbar als die übrigen Verseilelemente eines Erdseilluftkabels. Insbesondere beim Klemmen in konventionellen Seilklemmen können die optischen Übertragungselemente durch Quetschung beschädigt werden.

Der Erfindung liegt daher die Aufgabe zugrunde, einen Verseilverband von elektrisch leitfähigen Drähten und optischen Übertragungselementen zu schaffen, in dem die optischen Übertragungselemente gegen Quetschung und andere schädigende mechanische Einwirkungen geschützt sind.

Die Aufgabe wird erfindungsgemäß dadurch gelöst, daß in mindestens einer Stahldrahtlage mindestens ein Stahldraht im Verseilverband durch ein optisches Übertragungselement ersetzt ist.

Der Vorteil der Erfindung besteht darin, daß die Stahldrähte einen zugfesten und querdruckfesten Verseilkern bilden, bei dem in mindestens einer Verseillage mindestens ein Stahldraht durch optische Übertragungselemente ersetzt ist, ohne daß die Querdruckfestigkeit wesentlich vermindert wird. Der beim Befestigen des Luftkabels in einer Seilklemme entstehende Querdruck wird im wesentlichen durch das Gerüst der Stahldrähte aufgefangen.

Um den Verseilkern herum sind eine oder mehrere Lagen von Verseilelementen aus hartem Aluminium oder einer gut leitenden Aluminiumlegierung angeordnet, die wegen ihrer hohen Leitfähigkeit einen wesentlichen Teil des Transportes der elektrischen Energie übernehmen.

Durch die geringe Wärmeleitfähigkeit der Stahldrähte sind die optischen Elemente gegen die hohen Temperaturen der Aluminiumdrähte im Kurzschlußfall geschützt.

Die Erfindung kann vorteilhaft dadurch ausgestaltet werden, daß das oder die optischen Übertragungselemente mit einer Hülle aus einem Polyetherimid versehen sind. Ein solcher Werkstoff wird beispielsweise unter dem Warenzeichen ULTEM von der General Electric Co. vertrieben. Dieses Material bietet einen optimalen Schutz gegen mechanische Beschädigungen und ist außerdem bei einer Dauergebrauchstemperatur von bis zu 170° C stabil. Dadurch wird die Gefahr von Schädigungen der optischen Übertragungselemente im Falle eines elektrischen Kurzschlusses herabgesetzt. Alternativ kann die Hülle auch aus einem aromatischen Polyamid, aus Polyoxymethylen oder aus einem Fluorpolymeren bestehen.

Die Erfindung wird anhand des in der Zeichnung gezeigten und nachfolgend erläuterten Ausführungsbeispiels beschrieben.
In der Zeichnung zeigt
- Figur 1: ein Erdseilluftkabel im Querschnitt, bei dem der zentrale Stahldraht denselben Durchmesser hat wie die auf ihn aufgeseilten Stahldrähte,
- Figur 2: ein Erdseilluftkabel, bei dem der zentrale Stahldraht einen größeren Durchmesser aufweist als die auf ihn aufgeseilten Stahldrähte.

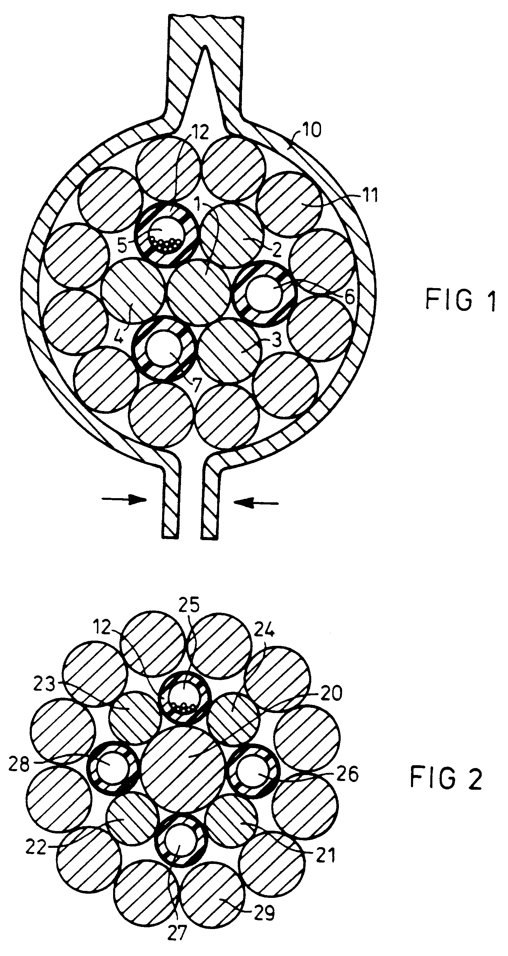

Figur 1 zeigt ein Erdseilluftkabel im Querschnitt, das von einer Klemme 10 umfaßt wird. Das Erdseilluftkabel besteht aus einem Verseilverband von Verseilelementen etwa gleichen Durchmessers. Auf einen zentralen Stahldraht 1 sind 6 Verseilelemente aufgeseilt, von denen drei 2, 3, 4 aus Stahldraht bestehen, während die drei anderen 5, 6, 7 durch optische Übertragungselemente gebildet werden. Auf diesen Verseilkern sind zwölf Drähte 11 aus hartem Aluminium oder einer gut leitenden Aluminiumlegierung aufgeseilt. Die außen liegende Verseillage von Aluminiumdrähten schützt u. a. die optischen Übertragungselemente vor schädigenden mechanischen Einflüssen von außen. Die optischen Übertragungselemente 5, 6 und 7 besitzen je eine schützende Hülle 12 aus einem Polyetherimid. Der durch die Seilklemme 10 auf das Kabel radial ausgeübte Druck wird durch das Gerüst der Stahldrähte 1, 2, 3, 4 aufgefangen und kann die optischen Übertragungselemente nicht gefährden. Die Stahldrähte 2, 3, 4 haben einen Durchmesser von 2,6 mm. Die Drähte aus Aluminium oder einer gut leitenden Aluminiumlegierung haben einen Durchmesser von 2,4 mm.

Figur 2 zeigt im Querschnitt ein Erdseilluftkabel, das einen zentralen Stahldraht 20 enthält, der einen größeren Durchmesser aufweist als die übrigen Verseilelemente. Auf diesen sind acht Verseilelemente aufgeseilt, von denen vier 21, 22, 23, 24 aus Stahldraht bestehen während die anderen vier 25, 26, 27, 28 durch optische Übertragungselemente gebildet werden. Der zentrale Stahldraht hat einen Durchmesser von 3,3 mm während die auf ihn aufgeseilten Stahldrähte einen Durchmesser von 2,1 mm haben. Auf den Verseilkern ist eine Lage von Drähten 29 aus hartem Aluminium oder einer gut leitenden Aluminiumlegierung aufgeseilt. Diese Drähte haben einen Durchmesser von 2,6 mm. Dadurch, daß sich wegen des größeren Durchmessers des zentralen Stahldrahtes in der ersten Verseillage mehr Verseilelemente befinden als bei dem in Figur 1 geschilderten Beispiel, können mehr Verseilelemente (nämlich mindestens 4) im Verseilverband durch optische Übertragungselemente ersetzt werden, ohne daß die Abstützung auf dem zentralen Stahldraht 20 verlorengeht. Die optischen Übertragungselemente 25, 26, 27, 28 werden jeweils durch eine Hülle 12 aus einem Polyetherimid geschützt.

## Patentansprüche

1. Erdseilluftkabel mit integrierten optischen Übertragungselementen (5, 6, 7, 25, 26, 27, 28), das aus mehreren Verseilelementen besteht, von denen mindestens eines mindestens ein optisches Übertragungselement enthält, wobei das Kabel einen zentralen Stahldraht (1) aufweist, auf den eine oder mehrere Lagen von Stahldrähten (2, 3, 4) aufgeseilt sind und wobei um den so gebildeten Verseilkern herum mindestens eine Lage von Verseilelementen (11) aus hartem Aluminium oder einer gut leitenden Aluminiumlegierung angeordnet ist,
**dadurch gekennzeichnet,** daß
in mindestens einer Stahldrahtlage mindestens ein Stahldraht im Verseilverband durch optische Übertragungselemente (5, 6, 7) ersetzt ist.

2. Erdseilluftkabel nach Anspruch 1,
**dadurch gekennzeichnet,** daß
das oder die optischen Übertragungselemente (5, 6, 7) mit einer Hülle (12) aus einem Polyetherimid versehen sind.

## Claims

1. Earth-wire overhead cable having integrated optical transmission elements (5, 6, 7, 25, 26, 27, 28), which comprises a plurality of stranded elements of which at least one contains at least one optical transmission element, the cable having a central steel wire (1) onto which one or more layers of steel wires (2, 3, 4) are stranded, and at least one layer of stranded elements (11) made from hard aluminium or an aluminium alloy which is a good conductor being arranged around the stranded core thus formed, characterised in that in at least one steel wire layer at least one steel wire is replaced in the stranded bond by optical transmission elements (5, 6, 7).

2. Earth-wire overhead cable according to Claim 1, characterised in that the optical transmission element(s) (5, 6, 7) is/are provided with a buffer tube (12) made from polyetherimide.

## Revendications

1. Câble aérien à fil de terre comportant des éléments de transmission optiques et intégrés (5, 6, 7, 25, 26, 27, 28) , constitué de plusieurs éléments de cablage, parmi lesquels au moins l'un d'eux comporte au moins un élément optique de transmission, du type dans lequel le câble comporte un fil d'acier central (1) sur lequel sont cablées une ou plusieurs couches de fils d'acier (2, 3, 4), et du type dans lequel au moins une couche d'éléments de cablage (11) composés d'aluminium solide ou d'un alliage d'aluminium à bonne conduction, est disposée autour des fils d'acier (2, 3, 4), autour du noyau de cablage ainsi constitué,
caractérisé en ce que, dans au moins une couche de fils d'acier, au moins un fil d'acier est remplacé, dans l'ensemble du câble, par l'élément optique de transmission (5, 6, 7).

2. Câble aérien à fils de terre selon la revendication 1, caractérisé en ce que le ou les éléments optiques de transmission (5, 6, 7) sont munis d'une gaine (12) en polyétherimide.
